# EUROPÄISCHE PATENTSCHRIFT

(11) **EP 2 323 802 B1**
(45) Veröffentlichungstag und Bekanntmachung des Hinweises auf die Patenterteilung: **07.08.2013**
(21) Anmeldenummer: 09777973.0
(22) Anmeldetag: 19.08.2009
(51) Int. Cl.: B23K 20/12, B23K 101/04, B23K 101/18

(54) **BESCHICHTUNGSVERFAHREN ZUR BESCHICHTUNG ZUMINDEST EINER OBERFLÄCHE EINES WERKSTÜCKS MIT EINER RELATIVEN BEWEGUNG ZWISCHEN DEM WERKSTÜCK UND EINEM BESCHICHTUNGSELEMENT**
METHOD OF COATING A SURFACE OF A WORKPIECE WITH A RELATIVE MOTION BETWEEN THE WORKPIECE AND A COATING ELEMENT
METHODE DE REVÊTEMENT D'UNE SURFACE D'UNE PIÈCE AVEC DÉPLACEMENT RELATIF ENTRE LA PIÈCE ET UN ÉLÉMENT DE REVÊTEMENT

(30) Priorität: 28.08.2008 DE 102008044763
(43) Veröffentlichungstag der Anmeldung: 25.05.2011
(73) Patentinhaber: Hochschule Für Angewandte Wissenschaften - Fachhochschule Kempten, 87435 Kempten (DE)
(72) Erfinder: SCHINDELE, Paul, 87435 Kempten (DE)
(74) Vertreter: Weber, Joachim
(86) Internationale Anmeldenummer: PCT/EP2009/006008
(87) Internationale Veröffentlichungsnummer: WO 2010/022883

(56) Entgegenhaltungen:
- DE-A1-102006 055 994
- GB-A- 2 271 737
- JP-A- 3 207 510
- JP-A- 2001 018 062
- US-B1- 6 814 823
- E.D. NICHOLAS AND W.M. THOMAS: "Metal Deposition by Friction Welding" WELDING JOURNAL, Bd. 65, Nr. 8, 1986, Seiten 17-27, XP002554926 Miami,FL, USA

## Beschreibung

Die Erfindung bezieht sich auf ein Beschichtungsverfahren gemäß dem Oberbegriff des Anspruches 1.

Im Einzelnen bezieht sich die Erfindung auf ein Beschichtungsverfahren, bei welchem eine Oberfläche eines Werkstücks mittels eines Beschichtungselements beschichtet wird, wobei von dem Beschichtungselement Material auf die Oberfläche des Werkstücks übertragen wird.

Der Stand der Technik zeigt Auftrags-Reibschweißverfahren oder Oberflächen-Friktionsverfahren, bei welchen ein Schweißwerkzeug in Reibeingriff mit einem Werkstück oder mehreren Werkstücken gebracht wird und diese durch die Reibungswärme partiell anschmilzt, so dass die Werkstücke nachfolgend verschweißt werden können. Bei diesen Verfahren, welche beispielsweise aus der EP 1 738 856 A1, der EP 1 514 632 B1 oder der EP 1 514 632 A1 bekannt sind, erweist es sich als nachteilig, dass zum Erwärmen der zu verschweißenden Bereiche des Werkstücks eine hohe Antriebskraft und eine hohe Energieeinbringung erforderlich sind. Für einen dünneren Werkstoffauftrag auf dünnere Werkstücke sind diese Verfahren nicht geeignet, da das Beschichtungselement selbst entsprechende mechanische Eigenschaften und Werkstoffeigenschaften aufweisen muss und da ein hoher Anpressdruck erforderlich ist. Somit muss das Werkstück zur Aufnahme der Anpresskraft ausreichend stabil sein. Sowohl die Materialpaarung als auch die Druckbeaufschlagung und die Temperaturführung erweisen sich für das Beschichten von Oberflächen als nicht geeignet.

Aus der GB 2 271 737 A ist ein Herstellungsverfahren für ringförmige Gegenstände bekannt, bei welchem ein Beschichtungselement, dessen Material auf ein Werkstück übertragen werden soll, in eine hohe Drehgeschwindigkeit gebracht wird. Durch die Reibungshitze zwischen dem Beschichtungselement und dem Werkstück wird das Beschichtungselement so weit erwärmt, dass sich sein Material plastifiziert, so dass das Material des Beschichtungselements auf das Werkstück aufgebracht werden kann.

Aus der US 6 814 823 B1 ist es bekannt, ein Beschichtungselement vorzuerwärmen, um dessen Material zu plastifizieren und anschließend unter Druck auf ein Werkstück aufzubringen.

E. D. NICHOLAS AND W. M. THOMAS: "Metal Deposition by Friction Welding", WELDING JOURNAL, Bd. 65, Nr. 8, 1986, Seiten 17-27, offenbart ebenfalls ein Verfahren, bei welchem lediglich das Beschichtungselement in Drehung versetzt und hierdurch durch die an der Oberfläche des Werkstücks auftretende Reibung erwärmt wird (Basis des Oberbegriffs des Anspruchs 1).

Die beiden japanischen Veröffentlichungen JP 03 207510 A und JP 2001 018062 A beschäftigen sich beide mit Auftragsschweißverfahren, bei welchen das Beschichtungselement aufgeschmolzen und eine Schweißraupe aufgebracht wird.

Die DE 10 2006 055 994 A1 beschreibt ein Verfahren zum Aufbringen einer Beschichtung auf einem Bauteil. Dabei wird der Beschichtungswerkstoff im Rahmen eines Auftragsverfahrens entlang der Berührungsfläche zwischen dem Beschichtungswerkstoff und dem Werkstück erwärmt. Diese Erwärmung erfolgt durch die Aufbringung eines Anpressdrucks und eine Relativbewegung zwischen dem Beschichtungswerkstoff und dem Werkstück.

Der Erfindung liegt die Aufgabe zugrunde, ein Beschichtungsverfahren der eingangs genannten Art zu schaffen, welches bei einfachem Aufbau und einfacher, kostengünstiger Durchführbarkeit die Beschichtung von Werkstückoberflächen mit unterschiedlichen Werkstoffpaarungen ermöglicht.

Erfindungsgemäß wird die Aufgabe durch die Merkmalskombination des Anspruchs 1 gelöst, die Unteransprüche zeigen weitere vorteilhafte Ausgestaltungen der Erfindung.

Erfindungsgemäß ist somit vorgesehen, dass der Beschichtungsvorgang in zumindest zwei Stufen abläuft. In der ersten Stufe oder dem ersten Verfahrensschritt wird zumindest der zu beschichtende Bereich der Oberfläche des Werkstücks erwärmt. Diese Erwärmung erfolgt separat von dem Beschichtungselement und von dem nachfolgenden Beschichtungsvorgang. In einer zweiten Stufe erfolgt dann der eigentliche Beschichtungsvorgang, bei welchem der zu beschichtende Bereich der Oberfläche des Werkstücks mit dem Beschichtungselement in Kontakt gebracht wird, wobei eine Relativbewegung zwischen dem Werkstück und dem Beschichtungselement aufgebracht wird.

Erfindungsgemäß besteht somit die Möglichkeit, die Oberfläche des zu beschichtenden Werkstücks getrennt von dem Beschichtungsvorgang und dem Beschichtungselement vorzuwärmen. Diese Vorwärmung kann in unterschiedlicher Weise erfolgen, beispielsweise durch Reibwärmung, mittels Induktionswärmung, mittels Strahlenwärmung (Laserstrahlen, Elektronenstrahlen) oder beispielsweise durch eine Heizflamme, einen Lichtbogen oder einen Plasmastrahl. Weiterhin ist es erfindungsgemäß möglich, die Erwärmung durch Wärmestrahlung oder durch Heißgas zu realisieren. Auch eine Widerstandserwärmung oder eine Erwärmung mittels Heizelementen kann erfindungsgemäß besonders günstig sein.

Weiterhin ist es erfindungsgemäß möglich, die Erwärmung des Werkstücks durch Reibung sowohl aus rotatorischer als auch aus linearer Relativbewegung zu realisieren. Auch eine Erwärmung mittels Ultraschall kann im Rahmen der Erfindung besonders günstig sein.

Zusätzlich kann es erfindungsgemäß vorteilhaft sein, auch den Beschichtungswerkstoff in gleicher Weise zu erwärmen. Dies kann auch durch eine Erwärmung des Beschichtungswerkstoffes durch den Wärmeinhalt des vorgewärmten Werkstückes beim Anpressvorgang erfolgen.

Das erfindungsgemäße Beschichtungsverfahren eröffnet somit die Möglichkeit, das Werkstück in geeigneter Weise zu erwärmen, wobei insbesondere die Werkstückgeometrie, das Werkstückvolumen, das Werkstückmaterial und weitere Parameter berücksichtigt werden können. Erfindungsgemäß ist es somit möglich, die Erwärmung des Werkstücks in optimaler Weise vorzunehmen, getrennt von dem Beschichtungselement und dessen Geometrie oder Werkstoffzusammensetzung.

In einer besonders günstigen Ausgestaltung der Erfindung ist vorgesehen, dass zur Erwärmung des zu beschichtenden Werkstücks ein Reibelement verwendet wird. Sowohl bei dem Erwärmen als auch bei dem Beschichten wird bevorzugterweise eine geeignete Anpresskraft aufgebracht.

Erfindungsgemäß ist vorgesehen, dass die Oberfläche des Werkstücks vor dessen Kontaktierung mit dem Beschichtungselement geeignet vorgewärmt wird. In gleicher Weise kann es günstig sein, auch die Oberfläche des Beschichtungselements selbst vor deren Kontaktierung mit der Oberfläche des Werkstücks zu erwärmen.

Erfindungsgemäß ist vorgesehen, dass Erwärmung jeweils auf die Plastifizierungstemperatur des jeweiligen Materials des Werkstücks und/oder des Beschichtungselements erfolgt. Durch die getrennte Vorwärmung ist es möglich, bei unterschiedlichen Materialien unterschiedliche Vorwärmtemperaturen vorzusehen.

Mittels des erfindungsgemäßen Beschichtungsverfahrens erfolgt ein Reibschweißprozess oder Reibauftragsprozess an der Oberfläche des Werkstücks, so dass dieses in zuverlässiger Weise und in gewünschter Dicke beschichtet werden kann. Durch die Dauer sowie die Kraftaufbringung bei der Kontaktierung der Oberfläche des Werkstücks mit dem Beschichtungselement ist es erfindungsgemäß somit möglich, die Dicke der Beschichtungslage im Einzelnen zu steuern bzw. zu regeln. Auch dies ist ein erheblicher Vorteil gegenüber den bekannten Verfahren, da die zur Erwärmung (Plastifizierung) benötigte Energie nicht durch ein Zusammenwirken zwischen dem Werkstück und dem Beschichtungselement selbst eingebracht wird.

Bevorzugterweise erfolgt somit die Erwärmung der Oberfläche sowohl des Werkstücks als auch des Beschichtungselements jeweils mittels eines Reibelements, welches in geeigneter Weise hinsichtlich seiner Geometrie ausgebildet werden kann und welches auch hinsichtlich seiner Materialeigenschaften in optimaler Weise angepasst werden kann. Hierbei ist beispielsweise zu berücksichtigen, dass das Reibelement selbst nicht mit der Oberfläche des Werkstücks bzw. des Beschichtungselements reagiert, oder, im anderen Falle, auch durch das Reibelement bereits ein gewisser Materialeintrag erfolgen kann, beispielsweise, um die Haftungsfähigkeit der durch das Beschichtungselement aufgebrachten Beschichtung zu verbessern und/oder um Zwischenschichten auszubilden.

In bevorzugter Weiterbildung der Erfindung ist es auch möglich, zumindest bei der Kontaktierung der erwärmten Oberflächen des Werkstücks und des Beschichtungselements einen Zusatzstoff hinzuzufügen, beispielsweise Pulvermischungen oder Ähnliches. Erfindungsgemäß kann es auch günstig sein, Zusatzmaterialien in die Oberfläche des Werkstücks einzubetten. Dieses Einbetten von Zusatzmaterialien kann auch durch eine Zugabe dieser Zusatzmaterialien zu dem Beschichtungswerkstoff erfolgen. Derartige Zusatzmaterialien können erfindungsgemäß beispielsweise Hartstoffe sein, die in die aufgetragene, noch warme und weiche Schicht eingebracht werden, beispielsweise durch Aufstreuen, Aufschütten, Aufblasen oder Ähnliches, und die anschließend durch Eindrücken oder Einwalzen fixiert werden.

Erfindungsgemäß ist es somit möglich, Oberflächenbeschichtungen unterschiedlichster Werkstoffpaarungen zu erzeugen und die Dicken der

Oberflächenbeschichtungen in optimaler Weise den jeweiligen Erfordernissen anzupassen.

Im Folgenden wird die Erfindung anhand von Ausführungsbeispielen in Verbindung mit der Zeichnung beschrieben. Dabei zeigen
- Fig. 1-3: in schematischer Weise die Außenbeschichtung einer Welle eines Rohres,
- Fig. 4, 5: ein abgewandeltes Ausführungsbeispiel zur Außenbeschichtung einer Welle oder eines Rohres,
- Fig. 6, 7: ein Ausführungsbeispiel zur Innenbeschichtung eines Rohres,
- Fig. 8, 9: ein Ausführungsbeispiel zur Innenbeschichtung einer Bohrung oder eines Rohres,
- Fig. 10, 11: ein Ausführungsbeispiel zur Beschichtung eines scheibenförmigen Werkstücks,
- Fig. 12, 13: ein weiteres Ausführungsbeispiel zur Beschichtung eines scheibenförmigen Werkstücks,
- Fig. 14, 15: ein Ausführungsbeispiel zur Beschichtung eines Bleches oder einer Platte,
- Fig. 16, 17: Ausführungsbeispiele zur Erwärmung mittels separater Wärmequellen,
- Fig. 18: ein weiteres Ausführungsbeispiel zur Beschichtung einer Scheibe bei Induktionserwärmung,
- Fig. 19-21: Ausführungsbeispiele zur Beschichtung unter Aufbringung von Zusatzwerkstoff,
- Fig. 22: eine perspektivische Ansicht einer ersten Vorrichtung zum Beschichten einer Platte,
- Fig. 23 und 24: eine perspektivische Ansicht einer weiteren Vorrichtung zur Beschichtung einer Platte, und
- Fig. 25 und 26: eine perspektivische Ansicht einer Vorrichtung zur Beschichtung eines zylindrischen Bauteils.

Bei den Ausführungsbeispielen sind gleiche Teile mit gleichen Bezugsziffern versehen.

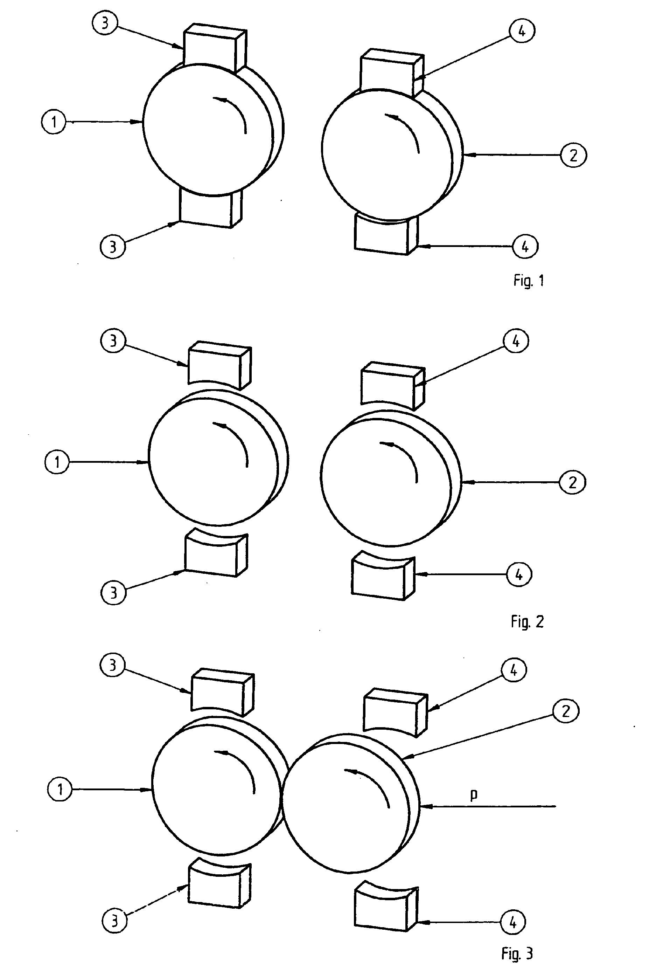

Die Fig. 1-3 zeigen jeweils ein Werkstück 1 in Form einer Welle oder eines Rohres sowie ein ebenfalls zylindrisches Beschichtungselement 2, von dessen Oberflächenmaterial auch die Oberfläche des Werkstücks 1 zu übertragen ist.

In Fig. 1 ist eine Erwärmungsphase dargestellt, bei welcher sowohl das Werkstück 1 als auch das Beschichtungselement 2 in Drehung versetzt werden. Das Werkstück 1 wird mittels backenartiger Reibelemente 3, welche gegen die Oberfläche des Werkstücks 1 gepresst werden, durch Reibung erwärmt. Gleiches gilt für das Beschichtungselement 2, welches mittels analoger Reibelemente 4 erwärmt wird.

In Fig. 2 ist ein Zustand gezeigt, in welchem die Reibelemente 3 und 4 zurückgefahren werden. Die Fig. 3 zeigt die dritte Stufe des erfindungsgemäßen Verfahrens, bei welchem mittels einer Anpresskraft P das Beschichtungselement 2 gegen das Werkstück 1 gepresst wird, um auf diese Weise eine Oberflächenbeschichtung durchzuführen.

Durch die in Fig. 1 gezeigte Erwärmung des Werkstücks 1 wird dessen Oberfläche erhitzt und gereinigt/aktiviert. Sobald die beiden Oberflächen des Werkstücks 1 und des Beschichtungselements 2 die jeweilige Temperatur erreicht haben, ergibt sich eine reaktive, weiche Oberfläche, die durch die gegenläufige Drehung und durch die Aufbringung der Anpresskraft P zu einer Reibschweißung führt. Dabei ist insbesondere die Oberfläche des Beschichtungselements 2 stärker erwärmt und weicher als die Oberfläche des Werkstücks 1. Somit kann eine wachsende Beschichtung des Werkstoffs des Beschichtungselements 2 auf der Oberfläche des Werkstücks 1 aufgebaut werden. Dies wird durch die Anpresskraft P gesteuert. Nachdem eine ausreichende Beschichtung aufgebracht wurde, werden das Werkstück 1 und das Beschichtungselement 2 voneinander getrennt.

Das erfindungsgemäße Beschichtungsverfahren weist u.a. folgende Vorteile auf:
- Poren- und lunkerfreie Beschichtungen;
- Es sind sehr viele Materialkombinationen, ähnlich dem Reibschweißen möglich;
- Kurze Beschichtungszeiten;
- Die Beschichtungsdicke ist fast beliebig einstellbar;
- Hohe Haftungsfestigkeit des Beschichtungswerkstoffs auf dem Grundwerkstoff;
- Es sind glatte Oberflächen erzeugbar;
- Geringe Kosten;
- Durch gezielte Wärmesteuerung von Werkstück und Auftragsmaterial sind auch Materialien mit sehr unterschiedlicher Wärmeleitung und Wärmekapazität beschichtbar und auftragbar;
- Neben dem Reibschweißprozess ist auch ein dem Hartlöten ähnlicher Verbindungsprozess möglich, der durch die Anpresskraft noch verstärkt wird;
- Große Anzahl von möglichen Materialkombinationen.

Das erfindungsgemäße Verfahren ist beispielsweise für die Beschichtung von Wellen und Lagerzapfen mit Lagerwerkstoffen, Verschleiß- und Korrosionsschichten und/oder elektrisch oder thermisch leitenden Werkstoffen bevorzugt einsetzbar.

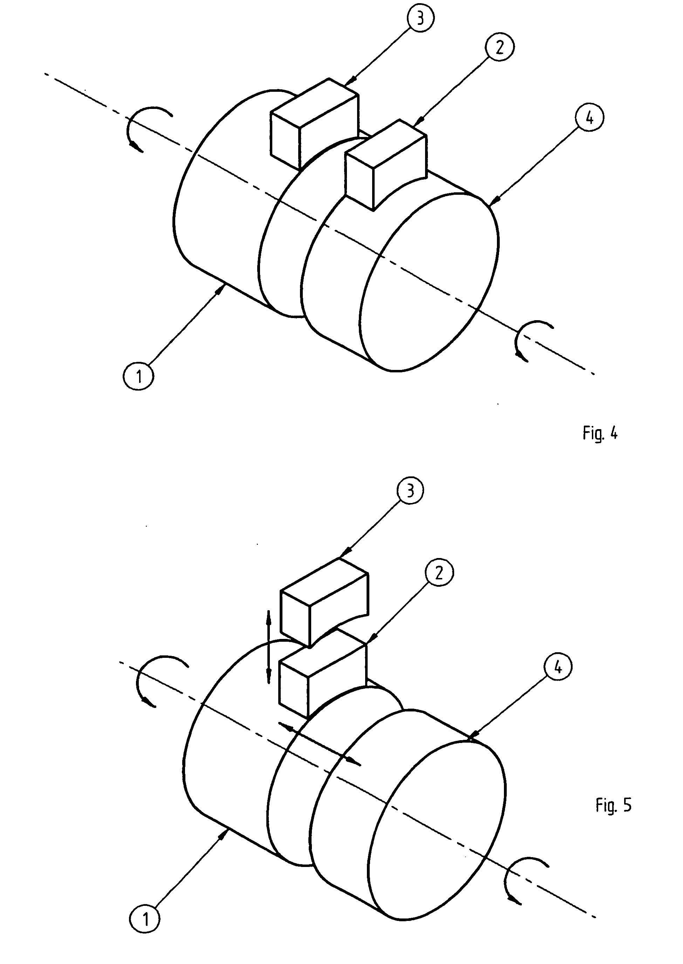

Die Fig. 4 und 5 zeigen eine Darstellung einer Wellen- oder Rohraußenbeschichtung. Dabei wird ein Werkstück 1 um eine Drehachse in Drehung versetzt und an einem Umfangs-Teilbereich mittels eines Reibelements 3 erwärmt. Mittels eines zylindrischen, in Drehung versetzten Reibelements 4 wird ein Beschichtungselement 2 erwärmt (Fig. 4). Nach der ausreichenden Erwärmung wird das Beschichtungselement 2 mit dem Werkstück 1 in Kontakt gebracht, während die Reibelemente 3 und 4 außer Funktion sind (Fig. 5).

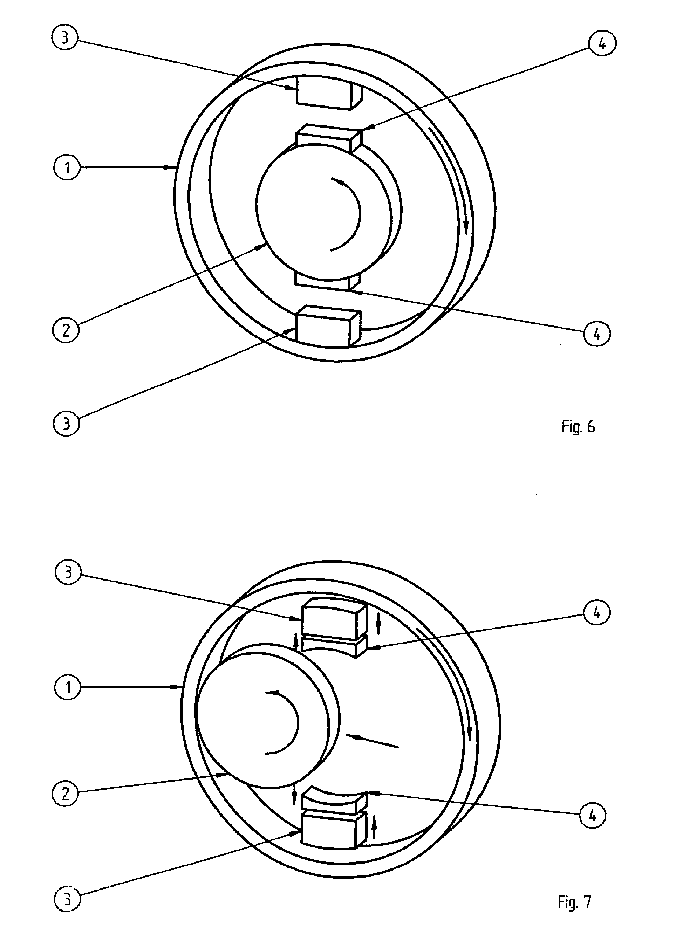

Die Fig. 6 und 7 zeigen eine erfindungsgemäße Variante zur Rohrinnenbeschichtung eines rohrförmigen Werkstücks 1 mittels eines zylindrischen Beschichtungselements 2. Diese werden, wie durch die Pfeile dargestellt, gegenläufig in Drehung versetzt. In der Erwärmungsphase (Fig. 6) werden das Werkstück 1 und das Beschichtungselement 2 mittels der Reibelemente 3 bzw. der Reibelemente 4 erwärmt. Nach erfolgter Erwärmung wird das Beschichtungselement 2 gegen die Innenoberfläche des Werkstücks 1 angepresst, um den Beschichtungsvorgang durchzuführen.

Diese Verfahrensvariante ist beispielsweise zur Beschichtung von Zylinderlaufbahnen in Motoren oder zum Korrosionsschutz oder Verschleißschutz von Rohren verwendbar. Auch die Beschichtung von Lagerbuchsen mit Lagerstoffen ist aufdiese Weise möglich.

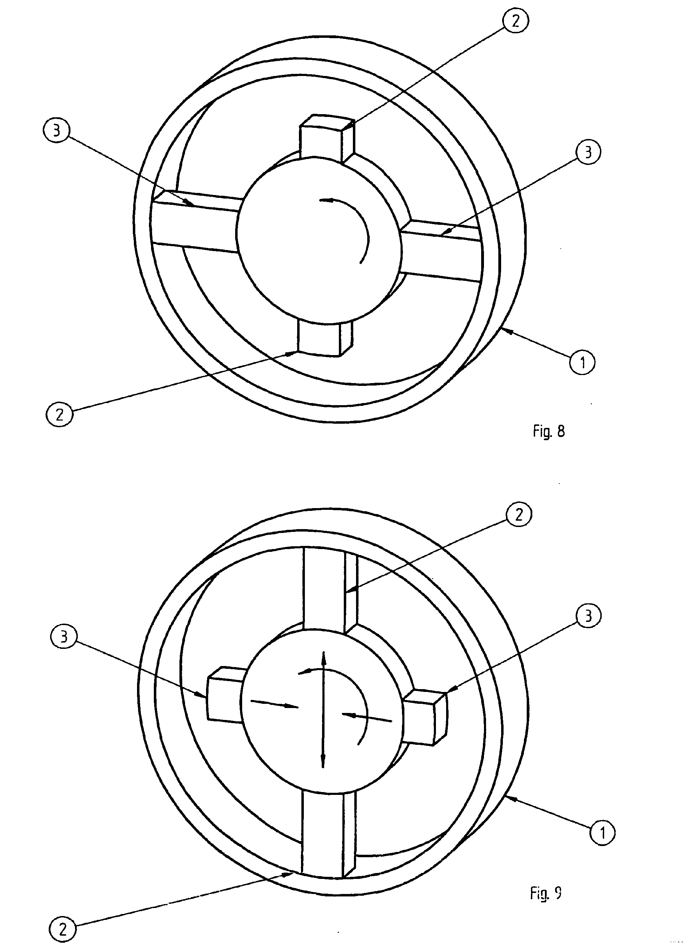

Die Fig. 8 und 9 zeigen eine weitere Variante der Beschichtung der Innenwandung einer Bohrung oder eines Rohres eines Werkstücks 1 mittels backenförmiger Beschichtungselemente 2. Hierbei erfolgt (siehe Fig. 8) zunächst eine Erwärmung der Oberfläche des Werkstücks 1 mittels der Reibelemente 3, während sich die Beschichtungselemente 2 nicht im Eingriff befinden. Nach der Erwärmungsphase werden, wie in Fig. 9 gezeigt, die Beschichtungselemente 2 gegen die Innenfläche des Werkstücks 1 angepresst, während die Reibelemente 3 außer Eingriff sind. Die Erwärmung der Beschichtungselemente 2 erfolgt hierbei beispielsweise durch einen zentrischen Bereich oder durch externe Wärmequellen.

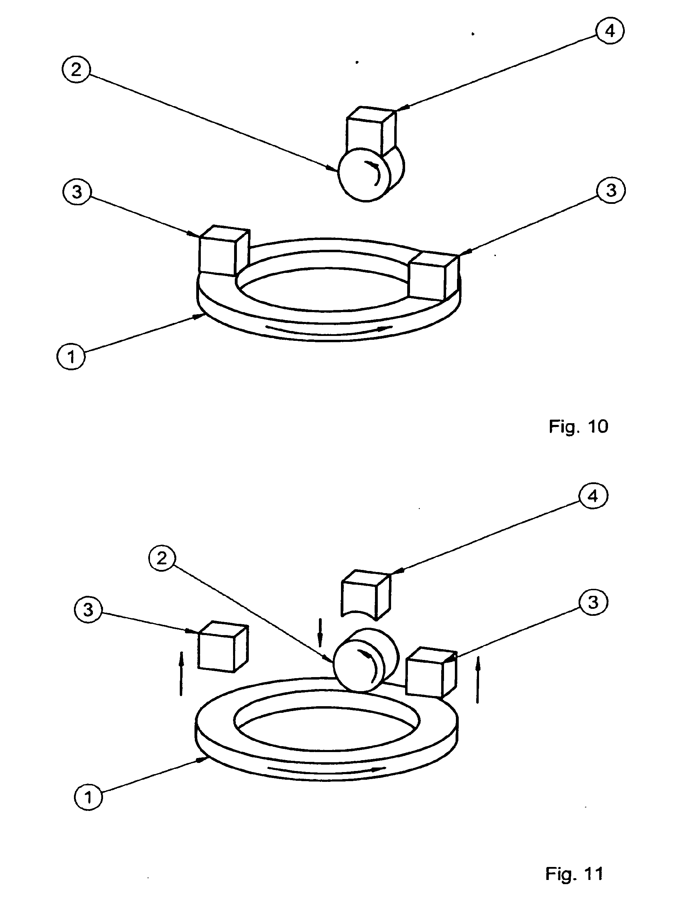

Die Fig. 10 und 11 zeigen ein Beispiel zur Beschichtung eines scheibenförmigen Werkstücks. Dieses wird, wie aus der Draufsicht gemäß Fig. 10 ersichtlich ist, in Drehung versetzt und mittels der Reibelemente 3 an seiner Oberfläche erwärmt. Ein zylindrisches oder stiftförmiges Beschichtungselement 2 wird mittels eines reibklotzartigen Reibelements 4 erwärmt. Nach der Erwärmungsphase wird das Beschichtungselement 2, welches sich gegenläufig zu dem Werkstück 1 dreht, mit diesem in Kontakt gebracht und gegen dieses angepresst, während sich die Reibelemente 3 und 4 außer Kontakt befinden (siehe Fig. 11).

Diese Ausführungsvariante ist beispielsweise zur Beschichtung von Bremsscheiben einsetzbar.

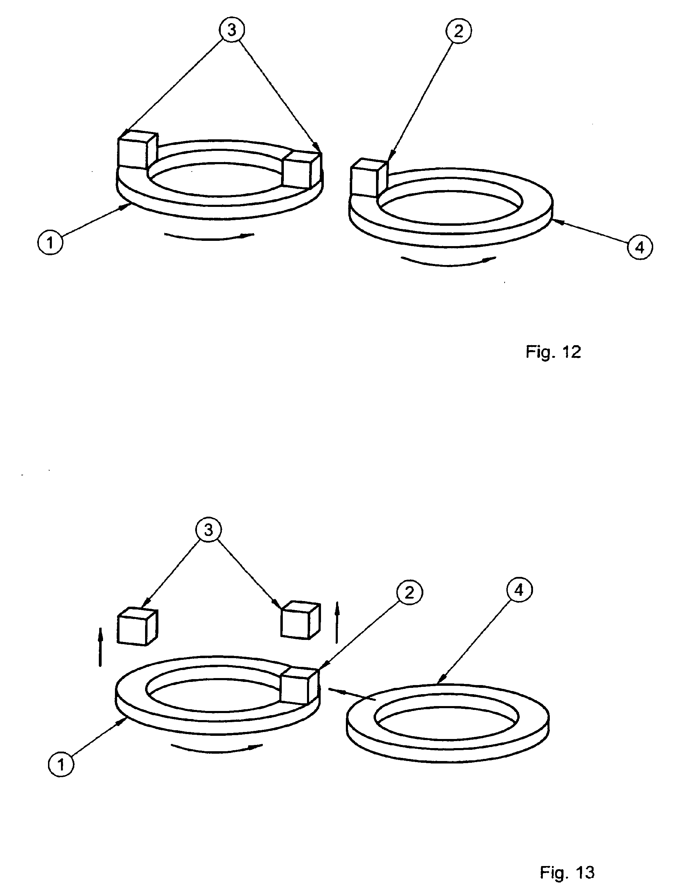

Eine abgewandelte Ausgestaltung eines Verfahrens zur Beschichtung von Scheiben zeigen die Fig. 12 und 13. Auch hierbei wird das zu beschichtende scheibenförmige Werkstück 1 mittels Reibelementen 3 erwärmt (Fig. 12). Das Beschichtungselement 2 ist dabei klotzartig aufgebaut und wird durch eine rotierende Scheibe als Reibelement 4 erwärmt. Nach erfolgter Erwärmung der Oberflächen wird das Beschichtungselement 2 in Kontakt mit der Oberfläche des Werkstücks 1 gebracht, während sich die Reibelemente 3 bzw. 4 außer Eingriff befinden (Fig. 13).

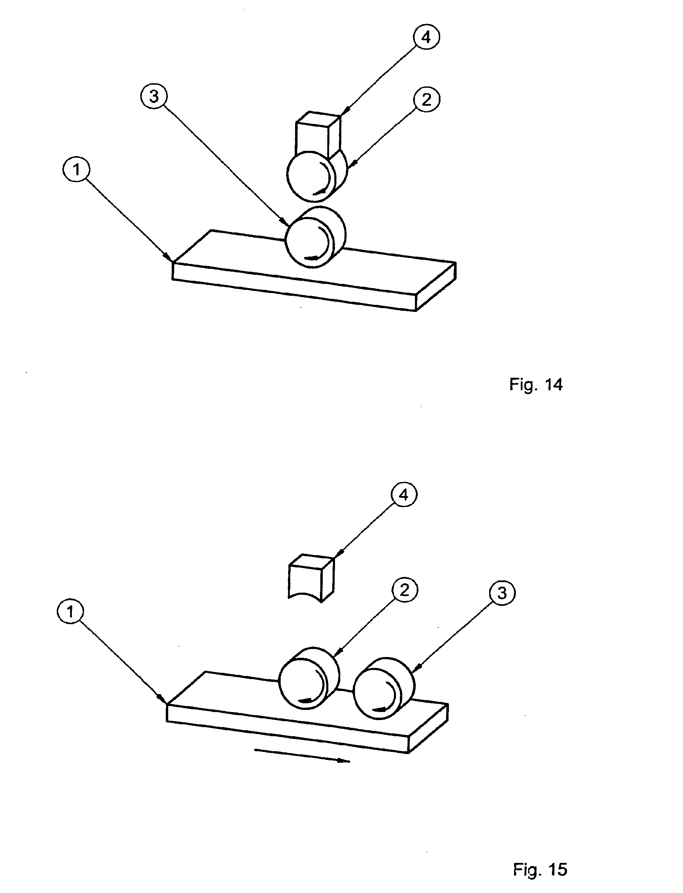

Die Fig. 14 und 15 zeigen eine efindungsgemäße Variante zur Beschichtung von Blechen und Platten. Dabei wird ein plattenförmiges Werkstück 1 mittels eines zylindrischen, rotierenden Reibelements 3 erwärmt, beispielsweise längs eines Oberflächenstreifens, so wie dies in der Draufsicht der Fig. 14 dargestellt ist. Gleichzeitig erfolgt eine Erwärmung eines zylindrischen Beschichtungselements 2 mittels eines backenartigen Reibelements 4.

Nach erfolgter Erwärmung des Beschichtungselements 2 wird dieses in Kontakt mit der Oberfläche des Werkstücks 1 gebracht und beispielsweise längs dieser bewegt, während sich das Reibelement 3 noch in Eingriff mit der Oberfläche des Werkstücks 1 befindet und, dem Beschichtungselement 2 vorlaufend, einen Oberflächenstreifen des Werkstücks erwärmt, so wie dies in Fig. 15 dargestellt ist. Der nach rechts gerichtete Pfeil zeigt dabei die Vorschubrichtung an. Das Beschichtungselement kann dabei beispielsweise während des Vorschubs weiterhin mittels des Reibelements 4 zusätzlich erwärmt werden. Hierdurch ist es möglich, auch großflächige Schichten aufzubringen. Ein Anwendungsbeispiel ist die Beschichtung von Blechen und Trägern, die Aufbringung von Versteifungsrippen auf Bleche durch Erzeugen von streifenförmigen Mustern oder beispielsweise die Kompensation von Verschleiß an Schienen.

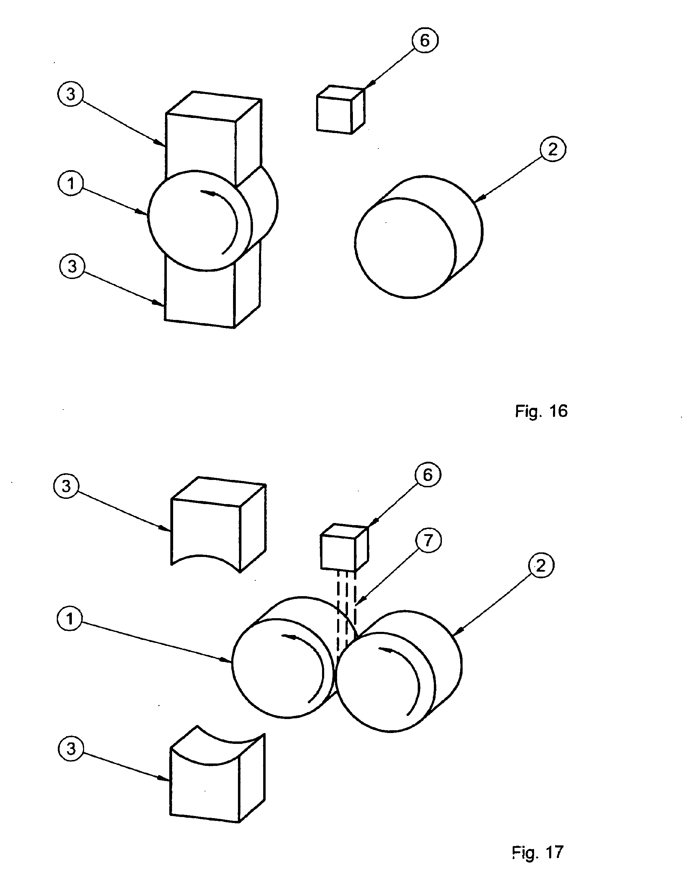

Die Fig. 16, 17 zeigen Ausgestaltungsvarianten, bei welchen beispielsweise eine Erwärmung des Beschichtungselements 2 mittels eines oder mehrerer zusätzlicher Wärmequellenelemente 6 erfolgen. Diese können einen Laserstrahl oder Elektronenstrahl aussenden.

Gemäß Fig. 16 erfolgt zunächst eine Erwärmung der Oberfläche des Werkstücks 1 mittels backenartiger Reibelemente 3, während das Wärmequellenelement 6 noch ausgeschaltet ist und das wellenförmige Beschichtungselement 2 sich im Stillstand befindet.

Nach Erwärmung der Oberfläche des Werkstücks 1 werden die Reibelemente 3 zurückgezogen. Das Beschichtungselement 2 wird in Drehung versetzt und mittels eines Wärmestrahls 7 von dem Wärmequellenelement 6 erwärmt. Dabei wird das Beschichtungselement 2 gegen das Werkstück 1 gepresst. In gleicher Weise ist es möglich, von dem Wärmequellenelement 6 einen Plasmastrahl oder einen Lichtbogen auszusenden. Auch eine direkte Erwärmung mittels einer Flamme ist möglich.

Bei der beschriebenen Variante ist es möglich, auch sehr harte und hitzebeständige Materialien, wie z.B. keramische Werkstoffe, an der Oberfläche auf Erweichungstemperatur zu bringen und im nachfolgenden Reibschweißprozess auf das Werkstück 1 aufzutragen. Somit können beispielsweise keramische Schichten auf metallische Grundkörper aufgebracht werden, ebenso ist es möglich, beispielsweise Zylinderlaufbahnen mit Hartmetallschichten zu versehen oder Lagerzapfen mit keramischen Verschleißschutzschichten auszustatten.

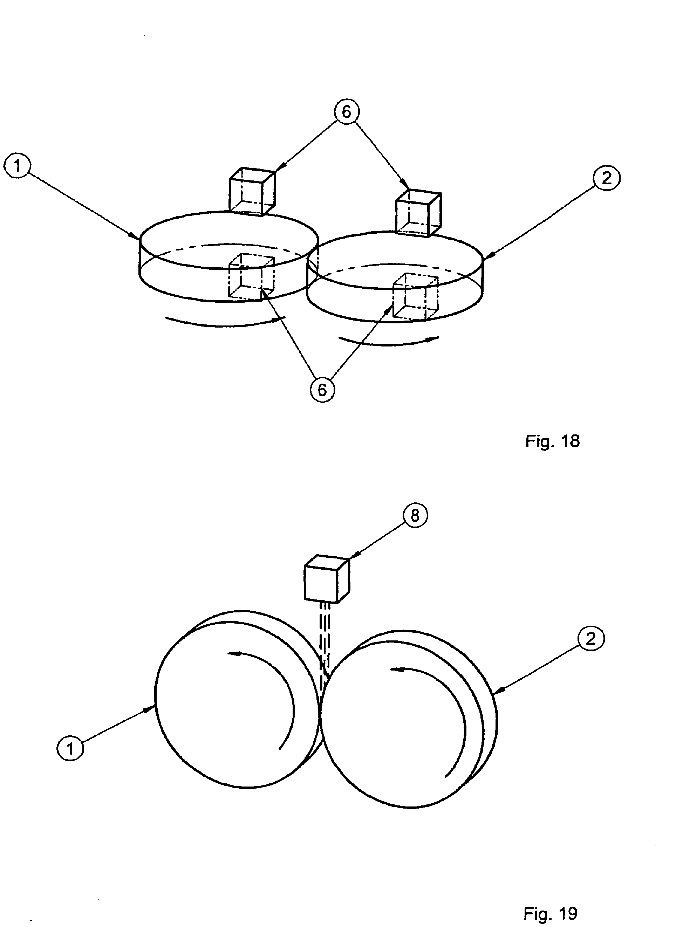

Die Fig. 18 zeigt eine Variante des erfindungsgemäßen Verfahrens zur Beschichtung von Scheiben, wobei ein scheibenförmiges Werkstück 1 in Drehung versetzt wird und mittels Wärmequellenelementen 6 in Form von Induktionsspulen erwärmt wird. Parallel hierzu wird ein scheibenförmiges Beschichtungselement 2 ebenfalls in Drehung versetzt und ebenfalls mittels Induktionsspulen erwärmt. Durch das radiale Zusammenpressen der beiden erwärmten Scheiben erfolgt der Werkstoffauftrag. Es ist somit möglich, am Umfangsrand eine Beschichtungsschicht aufzubringen.

Die Fig. 19-21 zeigen erfindungsgemäße Varianten, bei welchen zur Beschichtung aus einem Vorratsbehälter 8 ein Zusatzwerkstoff 5 aufgebracht wird, beispielsweise in Pulverform. Somit können beispielsweise pulverförmige Hartstoffe oder weitere Zusatzstoffe eingestreut oder mit Luft oder Schutzgas eingeblasen werden (siehe Fig. 19), während sich das Werkstück 1 in Kontakt mit dem Beschichtungselement 2 befindet. Hierdurch können beispielsweise Schichten aus Verbundwerkstoffen, beispielsweise für Bremsscheiben oder Reibscheiben, erzeugt werden.

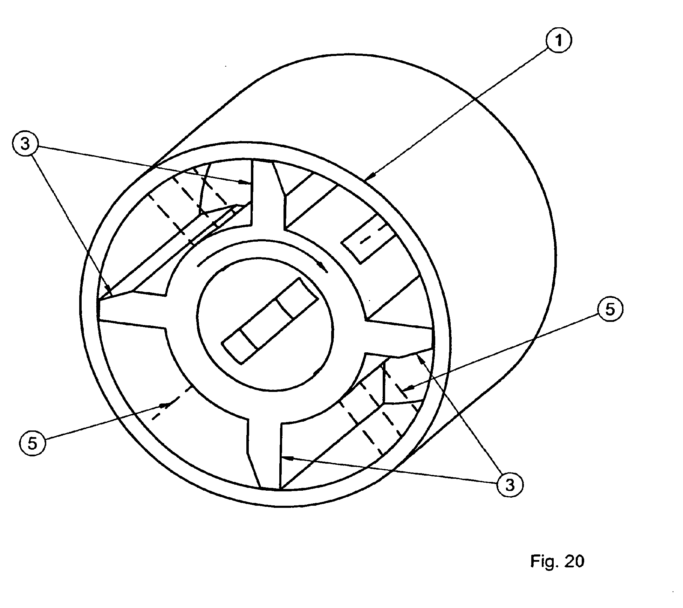

Die Fig. 20 zeigt eine Variante zur Beschichtung von Rohrinnenwänden durch Zugabe von Pulver als Zusatzstoff 5, beispielsweise zur Beschichtung von Lagerschalen, Zylinderlaufbahnen in Motoren, Rohrinnenbeschichtungen oder Hydraulik- oder Pumpenzylinder. Auch hierbei kann Zusatzwerkstoff 5 in Form von Pulver aus Reinmetallen, Metallgemischen, Kunststoffen oder Keramiken zugeführt werden.

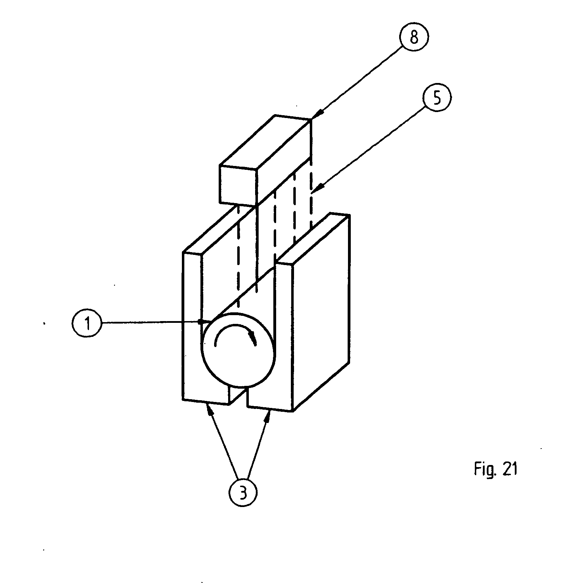

Eine ähnliche Ausgestaltung zeigt die Fig. 21 bei der Zugabe von Zusatzstoffen 5 während der Erwärmung eines Werkstücks 1 mittels bremsbackenartiger Reibelemente 3.

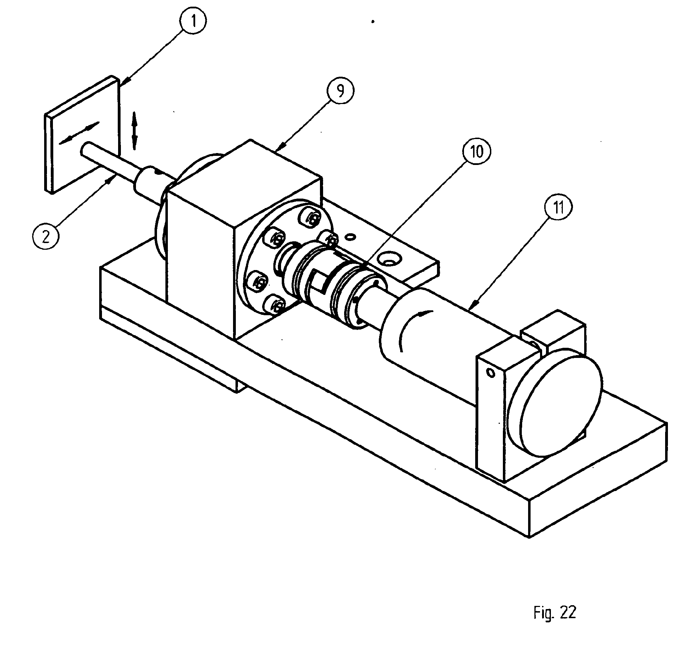

Die Fig. 22 zeigt ein plattenförmiges Werkstück 1, welches in zwei Dimensionen verfahrbar ist, so wie dies die Doppelpfeile zeigen. Weiterhin ist ein zylinderförmiges oder stabförmiges Beschichtungselement 2 dargestellt, welches auf einer Welle befestigt ist, welche in einem Lager gehalten ist. Die Vorrichtung umfasst weiterhin eine Kupplung 10 sowie einen Antriebsmotor 11.

Somit ist es möglich, das Werkstück 1 an der stirnseitigen Fläche des Beschichtungselements 2 so zu bewegen, dass eine flächige Beschichtung möglich ist.

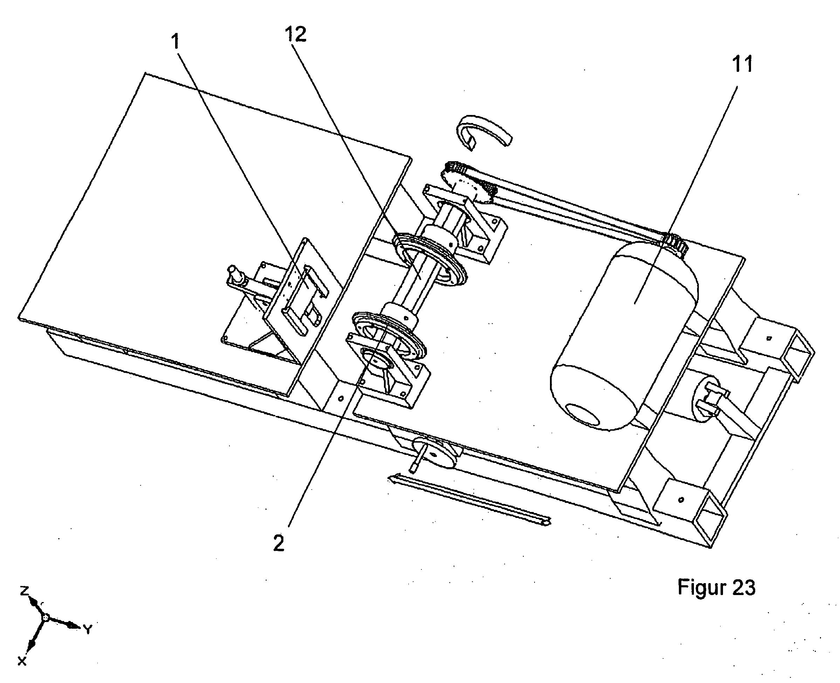

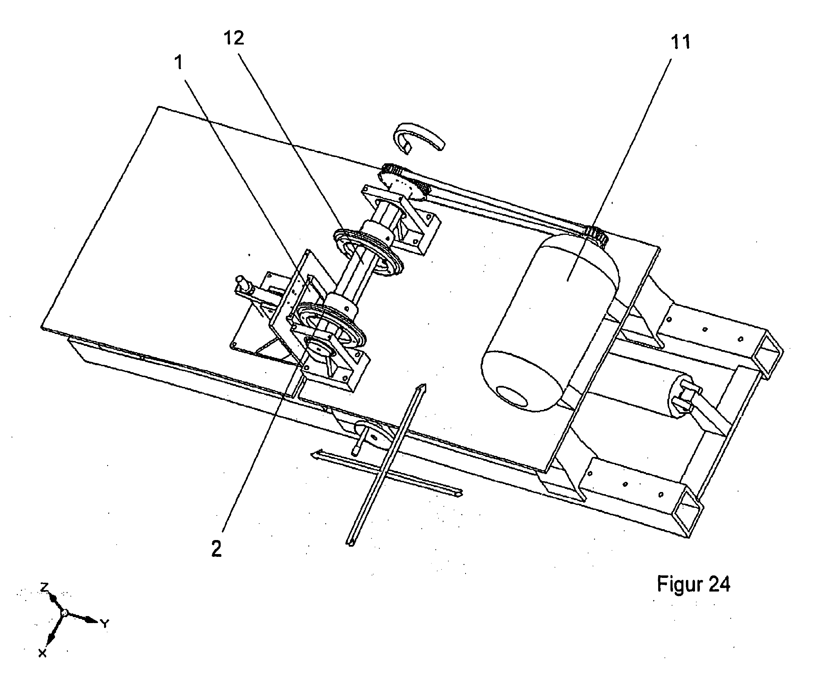

Die Fig. 23 und 24 zeigen eine abgewandelte Vorrichtung zu Beschichten eines plattenförmigen Werkstücks 1, wobei das Beschichtungselement 2 ringförmig ausgebildet ist und auf einer drehbaren Welle 12 gelagert ist, welche mittels eines Motors 11 antreibbar ist. Durch eine Verstellung in Richtung der in den Fig. 23 und 24 gezeigten Pfeile ist es möglich, nach entsprechender Erwärmung (auf die Darstellung der Heiz- oder Erwärmungsvorrichtung wurde sowohl in den Fig. 23 und 24 als auch in Fig. 22 verzichtet) eine Relativbewegung zwischen dem Beschichtungselement 2 und dem Werkstück 1 aufzubringen.

Aus Fig. 23 ist ersichtlich, dass die Vorrichtung im Erwärmungs- oder Anfangszustand ausreichend Freiraum zum Zugang sowohl zu dem Werkstück 1 als auch dem Beschichtungselement 2 zu gewähren, so dass die Beheizung oder Erwärmung in geeigneter Weise erfolgen kann. Die Fig. 24 zeigt dann den eigentlichen Bearbeitungsvorgang.

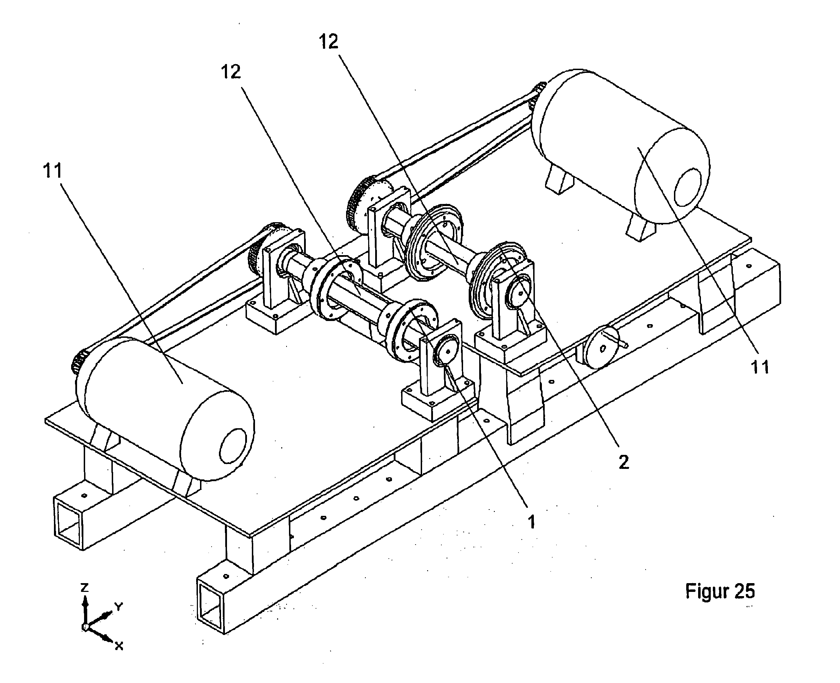

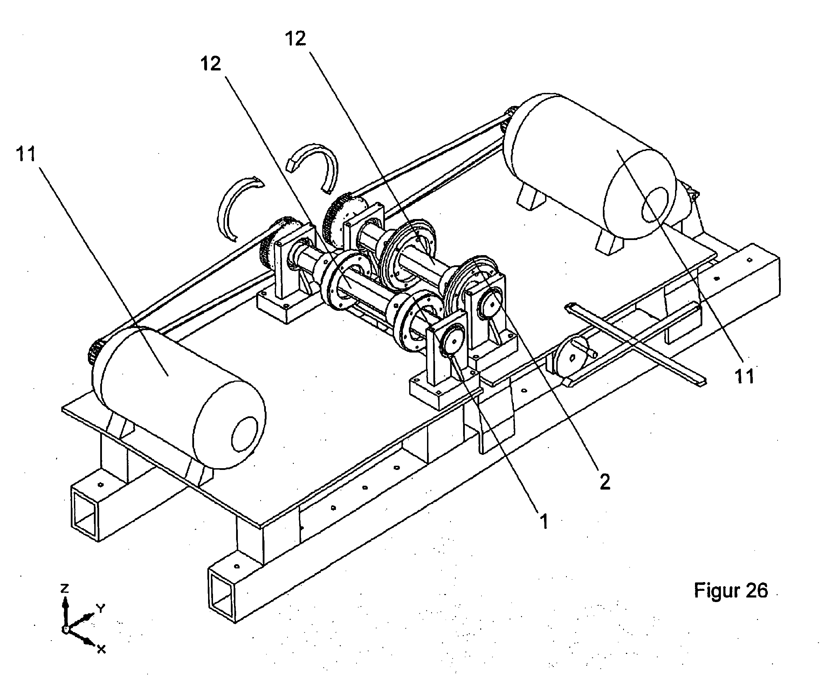

In analoger Weise zeigen die Fig. 25 und 26 zunächst den Ausgangszustand oder Erwärmungszustand (Fig. 25) sowie den Bearbeitungszustand (Fig. 26). Bei der in den Fig. 25 und 26 gezeigten Vorrichtung wird sowohl ein zylindrisches Werkstück 1, welches auf einer Welle 12 gelagert ist, als auch ein scheibenförmiges oder zylindrisches Beschichtungselement 2, welches ebenfalls auf einer weiteren Welle 12 gelagert ist, verwendet. Wie sich durch die Pfeildarstellungen ergibt, ist sowohl eine Axialbewegung längs der Achsen der Wellen 12 während des Beschichtungsvorgangs als auch eine senkrecht hierzu angeordnete Zustellbewegung vorgesehen.

## Patentansprüche

1. Beschichtungsverfahren zur Beschichtung zumindest einer Oberfläche eines Werkstücks (1) mittels eines Beschichtungselements (2), von welchem Material auf die Oberfläche des Werkstücks (1) übertragen wird,
**dadurch gekennzeichnet,**
**dass** in einem ersten Verfahrensschritt zumindest der zu beschichtende Bereich der Oberfläche des Werkstücks (1) erwärmt wird,
**dass** in einem weiteren Verfahrensschritt der zu beschichtende Bereich der Oberfläche eines Werkstücks (1) mit dem Beschichtungselement (2) in Kontakt gebracht wird, wobei eine Relativbewegung zwischen der Oberfläche des Werkstücks (1) und dem Beschichtungselement (2) aufgebracht wird,
**dass** zumindest die Oberfläche des Beschichtungselements (2) vor der Kontaktierung mit der zu beschichtenden Oberfläche des Werkstücks (1) erwärmt wird,
**dass** die Erwärmung der Oberfläche des zu beschichtenden Werkstücks (1) und/oder der Oberfläche des Beschichtungselements (2) jeweils zumindest auf die jeweilige Plastifizierungstemperatur erfolgt, und
**dass** bei der Kontaktierung des Werkstücks (1) mit dem Beschichtungselement (2) eine Anpresskraft (P) aufgebracht wird.

2. Verfahren nach Anspruch 1, **dadurch gekennzeichnet, dass** mittels des Beschichtungsverfahrens ein Reibschweißprozess zwischen der zu beschichtenden Oberfläche des Werkstücks (1) und der Oberfläche des Beschichtungselements (2) erfolgt.

3. Verfahren nach einem der Ansprüche 1 oder 2, **dadurch gekennzeichnet, dass** mittels des Beschichtungsverfahrens ein Reibauftragsprozess zwischen der zu beschichtenden Oberfläche des Werkstücks (1) und der Oberfläche des Beschichtungselements (2) erfolgt.

4. Verfahren nach einem der Ansprüche 1 bis 3, **dadurch gekennzeichnet, dass** die Erwärmung der zu beschichtenden Oberfläche des Werkstücks (1) mittels eines Reibelements (3) erfolgt.

5. Verfahren nach einem der Ansprüche 1 bis 4, **dadurch gekennzeichnet, dass** die Erwärmung der Oberfläche des Beschichtungselements (2) mittels eines Reibelements (4) erfolgt.

6. Verfahren nach einem der Ansprüche 1 bis 5, **dadurch gekennzeichnet, dass** zumindest bei der Kontaktierung der erwärmten Oberfläche des Werkstücks (1) mit dem Beschichtungselement (2) zumindest ein Zusatzstoff (5) zugegeben wird.

7. Verfahren nach einem der Ansprüche 1 bis 6, **dadurch gekennzeichnet, dass** die Erwärmung der Werkstückoberfläche mittels zumindest einer externen Wärmequelle (6) erfolgt.

## Claims

1. A coating method for coating at least a surface of a workpiece (1) using a coating element (2) from which material is transferred onto the surface of the workpiece (1), **characterized in**
**that** in a first method step at least a portion of the surface of the workpiece (1) to be coated is heated,
**that** in a further method step the portion of the surface of a workpiece (1) to be coated is brought into contact with the coating element (2), wherein a relative movement is applied between the surface of the workpiece (1) and the coating element (2),
**that** at least the surface of the coating element (2) is heated before contacting with the surface of the workpiece (1) to be coated,
**that** heating of the surface of the workpiece (1) to be coated and/or of the surface of the coating element (2) is respectively carried out at least to the respective plastification temperature, and
**that** a compressive force (P) is applied upon contacting of the workpiece (1) with the coating element (2).

2. The method as claimed in claim 1, **characterized in that** using the coating method a friction welding process takes place between the surface of the workpiece (1) to be coated and the surface of the coating element (2).

3. The method as claimed in any of claims 1 or 2, **characterized in that** using the coating method a friction surfacing process takes place between the surface of the workpiece (1) to be coated and the surface of the coating element (2).

4. The method as claimed in any of claims 1 to 3, **characterized in that** heating of the surface of the workpiece (1) to be coated is carried out by means of a friction element (3).

5. The method as claimed in any of claims 1 to 4, **characterized in that** heating of the surface of the coating element (2) is carried out by means of a friction element (4).

6. The method as claimed in any of claims 1 to 5, **characterized in that** at least one additive (5) is added at least upon contacting of the heated surface of the workpiece (1) with the coating element (2).

7. The method as claimed in any of claims 1 to 6, **characterized in that** heating of the workpiece surface is carried out using a least one external heat source (6).

## Revendications

1. Procédé d'enduction servant à enduire au moins une surface d'une pièce à usiner (1) au moyen d'un élément d'enduction (2), lequel recouvre de matériau la surface de la pièce à usiner (1),
**caractérisé en ce**
**que** lors d'une première étape de procédé, au moins la zone devant être enduite de la surface de la pièce à usiner (1) est réchauffée,
en ce que lors d'une autre étape de procédé, la zone devant être enduite de la surface d'une pièce à usiner (1) est amenée en contact avec l'élément d'enduction (2), sachant qu'un mouvement relatif est appliqué entre la surface de la pièce à usiner (1) et l'élément d'enduction (2),
en ce qu'au moins la surface de l'élément d'enduction (2) est réchauffée avant l'établissement du contact avec la surface devant être enduite de la pièce à usiner (1),
en ce que le réchauffement de la surface de la pièce à usiner (1) devant être enduite et/ou de la surface de l'élément d'enduction (2) est effectué respectivement au moins à la température de plastification respective, et
en ce que lors de l'établissement du contact de la pièce à usiner (1) avec l'élément d'enduction (2), une force de pression (P) est appliquée.

2. Procédé selon la revendication 1, **caractérisé en ce qu'**un processus de soudage par friction est effectué entre la surface devant être enduite de la pièce à usiner (1) et la surface de l'élément d'enduction (2) au moyen d'un procédé d'enduction.

3. Procédé selon l'une quelconque des revendications 1 ou 2, **caractérisé en ce qu'**un processus d'application par friction est effectué entre la surface devant être enduite de la pièce à usiner (1) et la surface de l'élément d'enduction (2) au moyen du procédé d'enduction.

4. Procédé selon l'une quelconque des revendications 1 à 3, **caractérisé en ce que** le réchauffement de la surface devant être enduite de la pièce à usiner (1) est effectué au moyen d'un élément de friction (3).

5. Procédé selon l'une quelconque des revendications 1 à 4, **caractérisé en ce que** le réchauffement de la surface de l'élément d'enduction (2) est effectué au moyen d'un élément de friction (4).

6. Procédé selon l'une quelconque des revendications 1 à 5, **caractérisé en ce qu'**au moins un additif (5) est ajouté lors de l'établissement du contact de la surface réchauffée de la pièce à usiner (1) avec l'élément d'enduction (2).

7. Procédé selon l'une quelconque des revendications 1 à 6, **caractérisé en ce que** le réchauffement de la surface de pièce à usiner est effectué au moyen au moins d'une source de chaleur (6) externe.
